# EUROPÄISCHE PATENTANMELDUNG

(11) **EP 1 876 059 A1**
(43) Veröffentlichungstag der Anmeldung: **09.01.2008**
(21) Anmeldenummer: 07012922.6
(22) Anmeldetag: 02.07.2007
(51) Int. Cl.: B60R 9/10

(54) **Halteeinrichtung für ein Fahrrad**

(30) Priorität: 08.07.2006 DE 102006031691
(71) Anmelder: Magna Car Top Systems GmbH, 74321 Bietigheim-Bissingen (DE)
(72) Erfinder: Maucher, Eberhard, 89075 Ulm (DE); Hans, Sandro, 13127 Berlin (DE); Hahn, Gerald, 21255 Wistedt (DE)

(57) **Zusammenfassung**

Diese Halteeinrichtung für ein Fahrrad ist für ein Kraftfahrzeug, vorzugsweise Personenkraftwagen bestimmt, welche Halteeinrichtung ein nach Art eines Hohlkörpers (8,9) ausgeführtes Aufnahmeelement für einen in eine aufrechte Position gebrachten Kurbelarm (10) einer Treteinrichtung des Fahrrads umfasst, der in das Aufnahmeelement eingeführt und mittels einer in Querrichtung zum Kurbelarm wirkenden Stellvorrichtung an wenigstens einem Anschlagglied des Aufnahmeelements festgelegt ist.

Um dies Halteeinrichtung zu optimieren, weist die mit dem Kurbelarm der Treteinrichtung zusammenarbeitende Stellvorrichtung sich an gegenüberliegenden Seiten des am Anschlagglied anliegenden Kurbelarms abstützende Stellglieder auf, die in Höhenrichtung des Aufnahmeelements ausrichtbar sind.

## Beschreibung

Die Erfindung betrifft eine Halteeinrichtung für ein Fahrrad, angeordnet in einem Kraftfahrzeug, vorzugsweise einem Personenkraftwagen nach dem Oberbegriff des Patentanspruchs 1.

Es ist ein Fahrradträger für einen Personenkraftwagen bekannt, DE 94 20 632 U1, der eine aufrecht stehendes Aufnahmeelement für einen Kurbelarm einer Treteinrichtung eines Fahrrads aufweist. Der Kurbelarm ruht einerseits über einen Kurbelzapfen in einer Schlitzausnehmung des Aufnahmeelements und andererseits ist er mit einer ersten Längsseite an einem Anschlag des Aufnahmeelements herangeführt. An einer zweiten zur ersten Längsseite beabstandeten Längsseite des Kurbelarms greift ein Stellglied an, das mit einem Gewindebolzen direkt den Kurbelarm gegen den Anschlage bzw. eine Lagerbüchse des Kurbelarms gegen das Aufnahmeelement spannt. Der mit einer Handhabe versehene Gewindebolzen wirkt mit einer Gewindemutter zusammen, die an einem von oben nach unten über das Aufnahmeelement geschobenen Halter befestigt ist.

In der US 5,025,932 ist ein Fahrradträger dargestellt, bei dem ein Kurbelarm einer Fahrrad Treteinrichtung in ein hohles, senkrecht ausgerichtetes Aufnahmeelement eingeführt ist. Dabei sind Zapfen eines Tretlagers und eines Pedals der Treteinrichtung in schlitzförmigen Ausnehmungen von mit Abstand zueinander verlaufenden Wänden des Aufnahmeelements festgelegt.

Es ist Aufgabe der Erfindung eine Halteeinrichtung für ein Fahrrad zu schaffen, die in Verbindung mit einem Kraftfahrzeug einsetzbar ist und sich durch geringen Bauaufwand, eine gute Funktion und einfache Handhabung auszeichnet. Dabei sollte aber auch sichergestellt sein, dass Kurbelarme mit quer zur Längsrichtung von Fahrrädern versehenen Kröpfungen, und zwar unterschiedlicher Ausprägung, in die Halteeinrichtung einsetzbar sind.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass mit dem Aufnahmeelement der Halteinrichtung, den Stellgliedern und dem Anschlagglied nicht nur eine vorbildliche und funktionsgerechte Einführung des Kurbelarms der Fahrrad Treteinrichtung, sondern auch eine sichere Festsetzung des besagten Kurbelarms in dem Aufnahmeelement gewährleistet ist. Gerade letzteres ist im Hinblick auf eine verkehrsichere Gestaltung der Halteinrichtung, angeordnet in einem Kraftfahrzeug von großer Bedeutung. Die Ausbildung und Verstellbarkeit beider Stelleelemente vereinfacht die Bedienung des Aufnahmeelements und ermöglicht darin die Festlegung von Kurbelarmen unterschiedlicher Konfiguration, die bauart- und markenbedingt in Querrichtung eines Fahrrads gesehen gerade bzw. unterschiedlich gekröpft sein können. Das eine Spannschraube besitzende Trägerglied für das erste Stellglied stellt ein aufwandarmes Bauteil dar, das dank seiner ersten Abwinkelungen zielgerichtet mit zweiten Abwinkelungen des Aufnahmeelements zusammenarbeitet. Das zweite Stellglied zeichnet sich durch einfachen Aufbau und leichte Handhabung aus. Schließlich ist durch die Werkstoffwahl der mit dem jeweiligen Kurbelarm zusammenwirkenden Bauteile des Anschlagglieds bzw. der Stellelemente sicher gestellt, dass die zumeist verchromten bzw. hochglanzpolierten Oberflächen des in dem Aufnahmeelement gehaltenen Kurbelarms nicht beeinträchtigt werden.

In der Zeichnung wird ein Ausführungsbeispiel der Erfindung gezeigt, das nachstehend näher beschrieben wird.

Es zeigen
Fig. 1 eine Schrägansicht auf einer Halteeinrichtung für ein Fahrrad, eingebaut in ein Kraftfahrzeug,

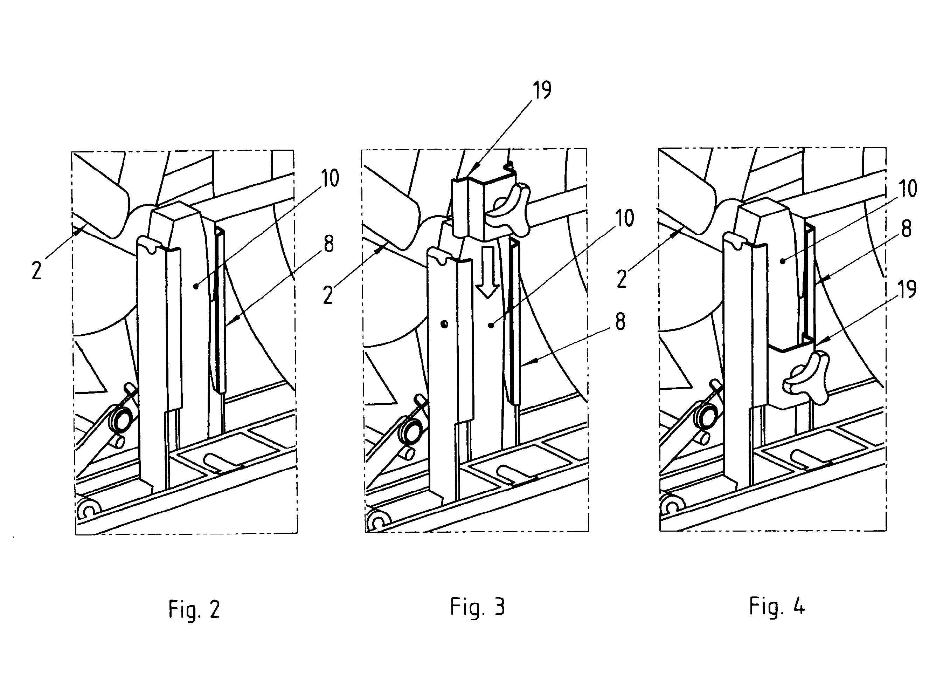

Fig. 2 eine Einzelheit X der Fig. 1 in größerem Maßstab mit einem eingeführten Kurbelarm einer Treteinrichtung des Fahrrads,
Fig. 3 eine Ansicht entsprechend Fig. 2 mit einer ersten ergänzenden Darstellung,
Fig. 4 eine Ansicht entsprechend Fig. 2 mit einer zweiten ergänzenden Darstellung,
Fig. 5 einen Schnitt etwa nach der Linie V-V der Fig. 4 der in größerem Maßstab,
Fig. 6 eine Ansicht entsprechend etwa Fig. 2, jedoch ohne eingeführten Kurbelarm,
Fig. 7 eine Ansicht entsprechend Fig. 6, jedoch mit einem eingeführten Trägerglied für ein erstes Stellglied
Fig. 8 eine Schrägansicht als Explosionsdarstellung mit dem Trägerglied und dem ersten Stellglied,
Fig. 9 eine Schrägansicht als Explosionsdarstellung mit dem zweiten Stellglied,
Fig. 10 eine Ansicht in Pfeilrichtung Y der 9,
Fig. 11 eine Ansicht in Pfeilrichtung Z der Fig. 9,

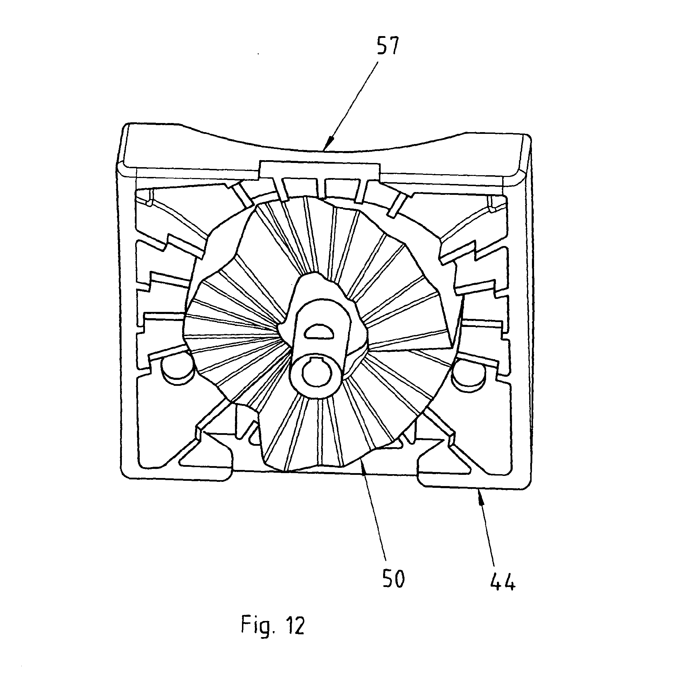

Fig. 12 eine Schrägansicht der Fig. 11 in größerem Maßstab.

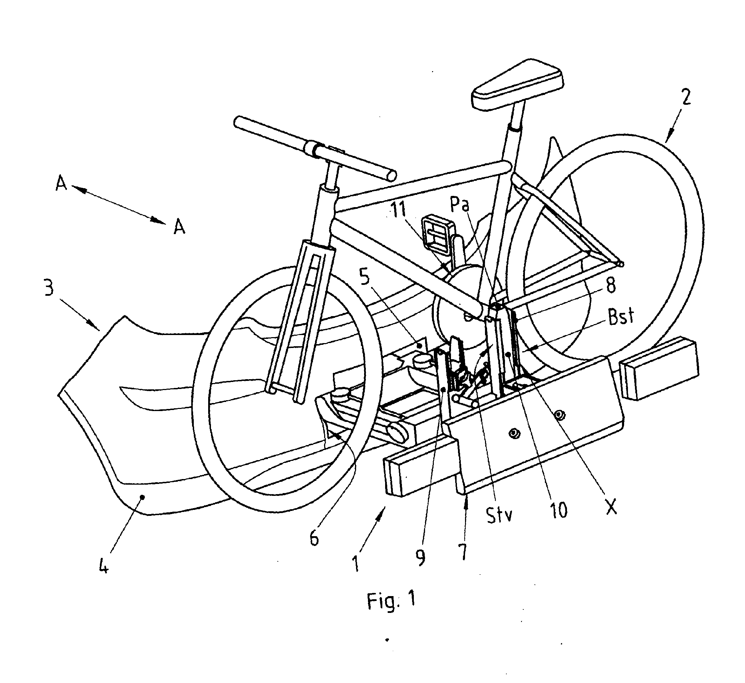

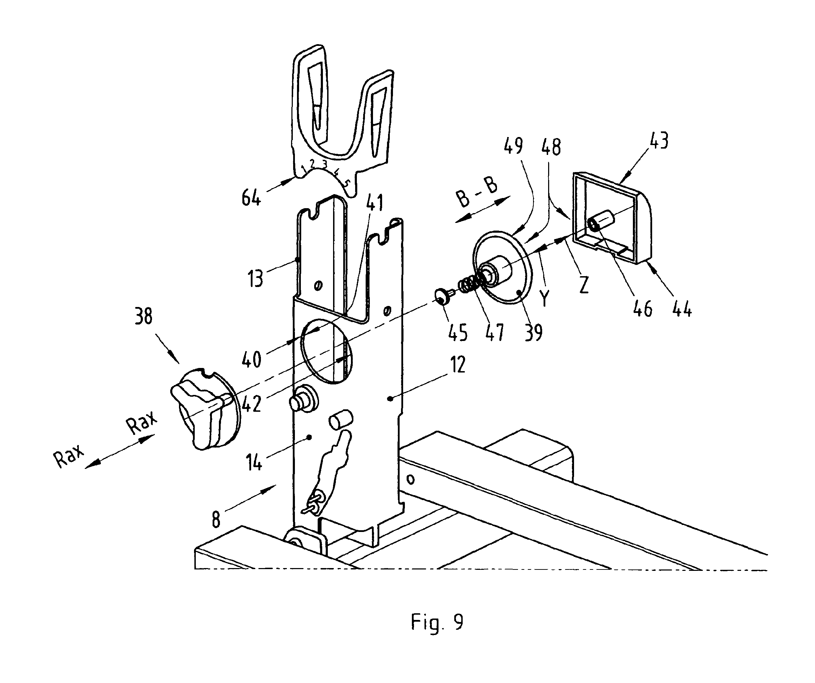

Eine Halteeinrichtung 1 für eine Fahrrad 2 ist Bestandteil eines Kraftfahrzeugs 3 der Gattung Personenkraftwagen, von dem lediglich ein Heckendteil 4 dargestellt ist. Das Heckendteil 4 ist mit einer Öffnung 5 versehen, über die die Halteeinrichtung 1 aus einer in einem Aufbewahrungsraum 6 des Kraftfahrzeugs 3 versenkten Ruhestellung in eine ausgefahrene Betriebstellung Bst bewegbar ist. In der Ruhstellung der Halteinrichtung 1 wird die die Öffnung 5 durch eine Abdeckung 7 verkleidet, die in die Formstruktur des Heckendteils 4 integriert ist. Mit der Halteinrichtung 1 verbunden sind erste und zweite Aufnahmeelemente 8 und 9, die aus einer horizontalen Stellung -nicht gezeigt- in eine vertikale Stellung Stv verschwenkt sind. Das erste Aufnahmeelement 8 ist nach Art eines rohrförmigen Holkörpers ausgebildet, in das ein in eine aufrechte Position Pa bewegter Kurbelarm 10 einer Treteinrichtung 11 des quer zur Fahrzeuglängsrichtung A-A verlaufenden Fahrrads 2 eingeführt ist; ein weiterer Kurbelarm eines zweite Fahrrads kann in das zweite Aufnahmeelement 9 eingebracht werden -Fig. 1-. Der Kurbelarm 10 wird zumindest abschnittsweise von Wänden 12, 13 und 14 -Fig. 9- des ersten Aufnahmeelements 8 umgeben, und er ist mittels einer Stellvorrichtung 15 und einem Anschlagglied 16 des Aufnahmeelements 8 festgelegt. Am Anschlaglied 16 liegt der Kurbelarm 10 an, wobei die Stellvorrichtung 15 in Querrichtung B-B zum Kurbelarm 10 wirksam ist.

Die Stellvorrichtung 15 weist ein erstes Stellglied 17 und ein zweites Stellglied 18 auf, die sich an gegenüberliegenden Seiten KaS1 und KaS2 des Kurbelarms 10 abstützen, und zwar bei Abstützung des Kurbelarms 10 am Anschlagglied 16. Dabei ist zumindest das erste Stellglied 17 in Höhenrichtung C-C des Aufnahmeelements 8 verstellbar ausgeführt, so dass die beiden Stellglieder 17 und 18 relativ zueinander ausrichtbar sind. Im Ausführungsbeispiel sind beide Stellglieder 17 und 18 in Querrichtung B-B zum Kurbelarm 10 einstellbar gestaltet, was eine gezielte durch die entgegenwirkenden und horizontalen Pfeile PF1, PF 2 und PF 3 veranschaulichte Einspannung bzw. Festlegung entsprechend geformter Kurbelarme unterschiedlicher Fahrräder erleichtert.

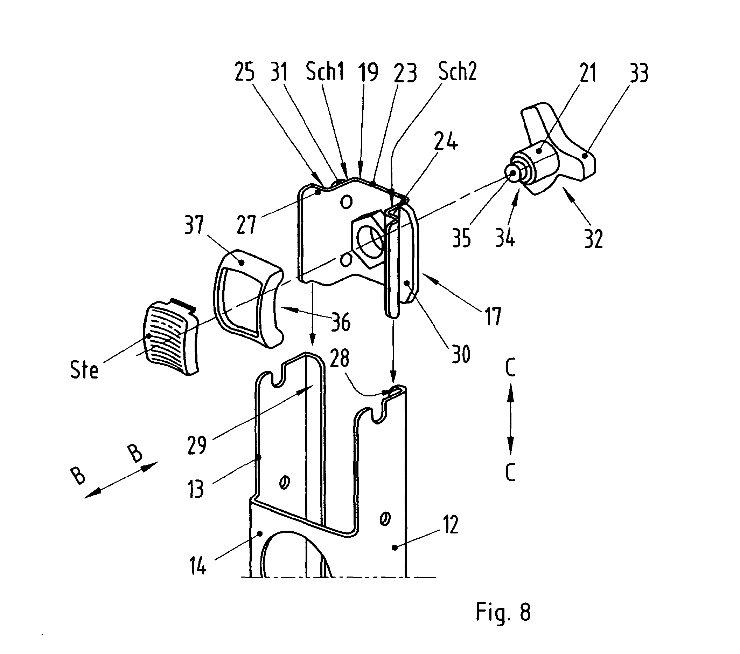

Das erste Stellglied 17 -Fig. 8- besitzt ein in Höhenrichtung C-C des Aufnahmeelements 8 bewegliches Trägerglied 19, das sich an einer Innenseite 20 des Aufnahmeelements 8 abstützt und mit einer Spannschraube 21 versehen ist, die in ein Gewinde 22 des Trägerglieds 19 hineingedreht ist. Das Trägerglied 19 wird durch ein etwa U-förmiges Profil 23 gebildet, das an freien Enden 24 und 25 von Schenkeln Sch1 und Sch2 erste Abwinkelungen 26 und 27 besitzt. Die ersten Abwinkelungen 26 und 27 des Trägerglieds 19 hintergreifen zweite Abwinkelungen 28 und 29 des Aufnahmeelements 8, wobei mit Abstand zu den ersten Abwinkelungen 26 und 27 am Trägeglied 19 Führungsorgane 30 und 31 vorgesehen sind, die eine einfache Führung des Trägerglieds 19 entlang der zweiten Abwinkelungen 28 und 29 ermöglichen. Die Spannschraube 21 ist an einem ersten Ende 32 mit einem ersten Drehgriff 33 und an einem zweiten Ende 34 mit einem Kugelkopf 35 für Kugelpfanne 36 eines zum Kurbelarm 10 hin ausgerichteten Druckstücks 37 versehen ist. Zwischen Kurbelarm 10 und Druckstück 37 ist ein Stützelement Ste vorgesehen, das am Drückstück 37 in Lage gehalten wird und aus einem elastischen Werkstoff besteht.

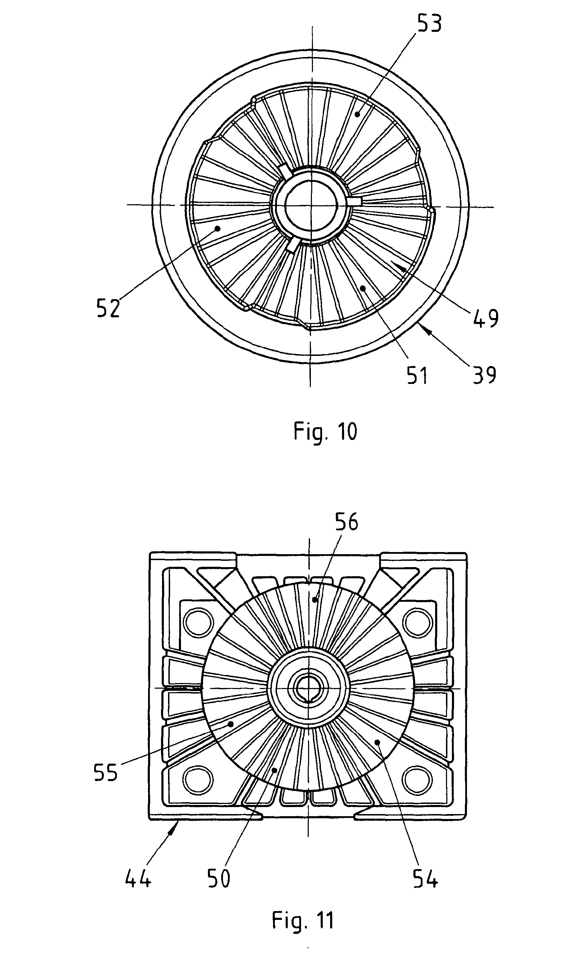

Das zweite Stellglied 18 -Fig. 9- ist an der Wand 14 des ersten Aufnahmeelements 8 angeordnet, und es weist einen zweiten Drehgriff 38 und ein Verstellelement 39 auf, die eine rotationssymmetrische Form und durch eine in axialer Richtung Rax-Rax wirkende Klipsverbindung -nicht dargestellt- miteinander verbunden sind. Dabei begrenzen der Drehgriff 38 und das Verstellelement 39 im zu einer Baueinheit zusammengesetzten Zustand eine Außenseite 40 und eine Innenseite 41 der Wand 14, welche Baueinheit in einer Bohrung 42 der Wand 14 gelagert ist. Das Verstellelement 39 trägt an einer dem Kurbelarm 10 zugekehrten Seite 43 ein Stützelement 44, und das Verstellelement 39 ist mit dem Stützelement 44 über eine axiale Schraube 45 verbunden, die mit einem Gewindezapfen 46 des Stützelements 44 in Wirkverbindung steht. Darüber hinaus ist zwischen Verstellelement 39 und Stützelement 44 eine Druckfeder 47 und eine Betätigungsvorrichtung 48 wirksam. Mittels der Betätigungsvorrichtung 48 ist eine axiale Verstellung des Stützelements 44 in Querrichtung B-B durchführbar, welche Betätigungsvorrichtung 48 eine erste Verzahnung 49 am Verstellelement 39 -Fig. 10- und eine zweite Verzahnung 50 am Stützelement 44 -Fig. 11- umfasst. Die einander zugekehrten Verzahnungen 49 und 50 sind in der Weise ausgebildet, dass die einmal eingestellte Position des zweiten Stellglieds 18 auch unter betriebsbedingten Vibrationen des Kraftfahrzeugs beibehalten wird. Die Verzahnungen 49 und 50 weisen jeweils drei Verzahnungsabschnitte 51, 52 und 53 bzw. 54, 55 und 56, die gleichmäßig über die Umfängen des Verstellelements 39 bzw. des Stützelements 44 verteilt angeordnet sind. Damit der Kurbelarm 10 der Treteinrichtung 11 des Fahrrads 2 funktionsgerecht d.h. zentriert von dem aus nachgiebigem Werkstoff hergestellten Stützelement 44 aufgenommen wird, ist letzteres auf der dem Kurbelarm zugekehrten Seite 57 konkav gestaltet.

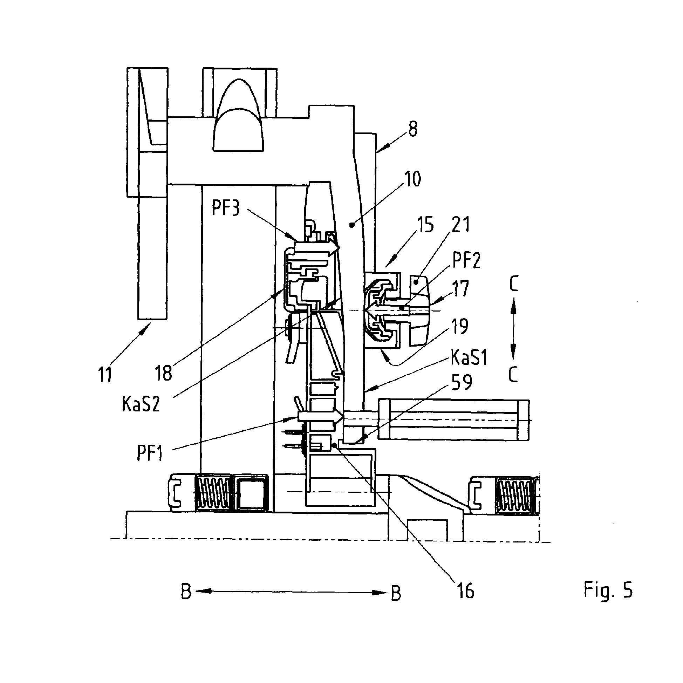

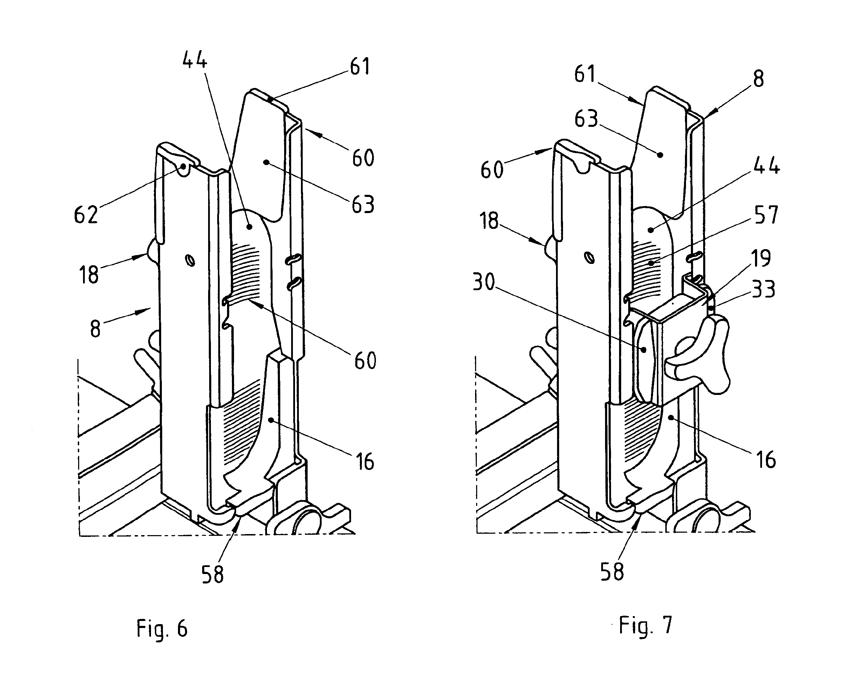

Aus den Fig. 5, 6 und 7 geht hervor, dass das Anschlagglied 16, das als ein erster Einsatz 58 des Aufnahmeelements 8 aus elastischem Material ausgeführt ist, den Kurbelarm 10 einerseits in Querrichtung B-B und andererseits an einem freien Ende 59 des Kurbelarms 10 -Fig. 5- abstützt. Ein oberes Ende 60 des ersten Einsatzes 58 bildet eine Drehsicherung für das Stützelement 44 des zweiten Stellglieds 18. Ein weiterer zweiter Einsatz 61 des Aufnahmeelements 8 ist an einem freien Ende 22 von letzterem angebracht und wirkt, weil aus nachgiebigem Werkstoff bestehend, als Schutz gegen Beschädigungen von hochwertigen Oberflächen -lackiert oder verchromten- des Fahrrads 1. Der zweite Einsatz 61 wird mittels hintergreifenden Halteeinrichtungen 62 - Formschluss bewirkend- und federnden Zungen 63 -Kraftschluss bewirkend- im ersten Aufnahmeelement 8 in Lage gehalten. Schließlich ist der zweite Einsatz 61 auf der dem zweiten Drehgriff 38 zugekehrten Seite mit einer Skalierung 64 -Fig. 9- versehen, die zur gezielten Einstellung des zweiten Stellglieds dient.

## Patentansprüche

1. Halteeinrichtung für ein Fahrrad, angeordnet in einem Kraftfahrzeug, vorzugsweise Personenkraftwagen, welche Halteeinrichtung ein nach Art eines Hohlkörpers ausgeführtes Aufnahmeelement für einen in eine aufrechte Position gebrachten Kurbelarm einer Treteinrichtung des Fahrrads umfasst, der in das Aufnahmeelement eingeführt und mittels einer in Querrichtung zum Kurbelarm wirkenden Stellvorrichtung an wenigstens einem Anschlagglied des Aufnahmeelements festgelegt ist, **dadurch gekennzeichnet, dass** die mit dem Kurbelarm (10) der Treteinrichtung (11) zusammenarbeitende Stellvorrichtung (15) sich an gegenüberliegenden Seiten (KaS1 und KaS2) des am Anschlagglied (16) anliegenden Kurbelarms (10) abstützende Stellglieder (17 und 18) aufweist, die in Höhenrichtung (C-C) des Aufnahmeelements (8) ausrichtbar sind.

2. Halteeinrichtung nach Anspruch 1, **dadurch gekennzeichnet, dass** die Stellvorrichtung (15) ein erstes Stellglied (17) und ein zweites Stellglied (18) aufweist, wovon zumindest eine Stellglied (17 oder 18) in Querrichtung (B-B) zum Kurbelarm (10) verstellbar ist.

3. Halteeinrichtung nach den Ansprüchen 1 und 2, **dadurch gekennzeichnet, dass** das erste Stellglied (17) und das zweite Stellglied (18) in Querrichtung (B-B) zum Kurbelarm (10) einstellbar sind.

4. Halteeinrichtung nach den Ansprüchen 1 bis 3, **dadurch gekennzeichnet, dass** das erste Stellglied (17) ein in Höhenrichtung (C-C) des Aufnahmeelements (8) bewegliches Trägerglied (19) besitzt, das sich einerseits an einer Innenseite (20) des Aufnahmeelements (8) abstützt und andererseits mit einer in eine Gewinde (22) des Trägerglieds (19) hinein gedrehten Spannschraube (21) versehen ist.

5. Halteinrichtung nach Anspruch 4, **dadurch gekennzeichnet, dass** das Trägerglied (19) durch ein Profil (23) mit etwa U-förmigem Querschnitt gebildet wird, das an freien Enden (24 und 25) von Schenkeln (Sch1 und Sch2) erste Abwinkelungen (26 und 27) aufweist, die zweite Abwinkelungen (28 und 29) des Aufnahmeelements (8) hintergreifen.

6. Halteinrichtung nach Anspruch 5, **dadurch gekennzeichnet, dass** mit Abstand zu den zweiten Abwinkelungen (28 und 29) des Aufnahmeelements (8) Führungsorgane (30 und 31) am Trägerglied (19) vorgesehen sind.

7. Halteinrichtung nach Anspruch 4, **dadurch gekennzeichnet, dass** die Spannschraube (21) an einem ersten Ende (32) mit einem Drehgriff (33) versehen ist und an einem zweiten Ende (34) einen Kugelkopf (35) für eine Kugelpfanne (36) eines zum Kurbelarm (10) hin ausgerichteten Druckstücks (37) aufweist.

8. Halteeinrichtung nach Anspruch 7, **dadurch gekennzeichnet, dass** zwischen Kurbelarm (10) und Druckstück (37) ein Stützelement (44) an besagtem Druckstück (37) angebracht ist, das bspw. aus elastischem Werkstoff besteht.

9. Halteeinrichtung nach den Ansprüchen 1 und 2, **dadurch gekennzeichnet, dass** das zweite Stellglied (18) fest an einer Wand (14) des Aufnahmeelements (8) angeordnet ist.

10. Halteeinrichtung nach Anspruch nach 9, **dadurch gekennzeichnet, dass** das zweite Stellglied (18) einen Drehgriff (38) und ein Verstellelement (39) umfasst, die drehbar in einer Bohrung (42) der Wand (14) des Aufnahmeelements (8) gelagert sind.

11. Halteeinrichtung nach Anspruch 10, **dadurch gekennzeichnet, dass** das Verstellelement (39) unter Vermittlung einer axial wirkenden Betätigungsvorrichtung (48) mit einem zum Kurbelarm (10) hin ausgerichteten Stützelement (44) versehen ist.

12. Halteeinrichtung nach Anspruch 11, **dadurch gekennzeichnet, dass** die Betätigungsvorrichtung (48) Axialbewegungen bewirkende Verzahnungen (49 und 50) zwischen Verstellelement (39) und Stützelement (44) aufweist.

13. Halteeinrichtung nach Anspruch 11, **dadurch gekennzeichnet, dass** zumindest das mit dem Kurbelarm (10) zusammenwirkende Stützelement (4) aus nachgiebigem Werkstoff besteht.

14. Halteeinrichtung nach Anspruch 1, **dadurch gekennzeichnet, dass** das Anschlagglied (16) den Kurbelarm (10) einerseits in Querrichtung (B-B) und andererseits an einem freien Ende (59) des Kurbelarms (10) abstützt.

15. Halteinrichtung nach den Ansprüchen 1 und 14, **dadurch gekennzeichnet, dass** das Anschlagelement (16) als ein in das Aufnahmeelement (8) eingebauter erster Einsatz (58) ausgeführt ist.

16. Halteeinrichtung nach Anspruch 1, **dadurch gekennzeichnet, dass** das Aufnahmeelement (8) an einem freien oberen Ende (60) mit einem vorzugsweise elastischem Werkstoff bestehenden weiteren zweiten Einsatz (61) versehen ist.

17. Halteinrichtung nach Anspruch 16, **dadurch gekennzeichnet, dass** der zweite Einsatz (61) formschlüssig und/ oder kraftschlüssig im Aufnahmeelement in Lage gehalten wird.
